# FASCICULE DE BREVET EUROPEEN

(11) **EP 0 522 374 B1**
(45) Date de publication et mention de la délivrance du brevet: **01.03.1995**
(21) Numéro de dépôt: 92110848.6
(22) Date de dépôt: 26.06.1992
(51) Int. Cl.: B29D 30/06

(54) **Moule pour pneumatique et procédé de moulage de pneumatique utilisant un tel moule**
Reifenform und Verfahren zum Formen von Reifen mit dieser Form
Mold for tyres and method of molding tyres with such a mold

(30) Priorité: 10.07.1991 FR 9108789
(43) Date de publication de la demande: 13.01.1993
(73) Titulaire: COMPAGNIE GENERALE DES ETABLISSEMENTS MICHELIN - MICHELIN & CIE, 63040 Clermont-Ferrand Cédex (FR)
(72) Inventeur: Ladouce, Jean-Pierre, F-63000 Clermont-Ferrand (FR)
(74) Mandataire: Bauvir, Jacques

(56) Documents cités:
- DE-A- 1 808 811
- DE-A- 2 113 698
- US-A- 3 797 979

## Description

La présente invention concerne les moules pour pneumatiques, et plus précisément les moules du type à secteurs. Dans ce type de moule, l'espace de moulage de la surface extérieure du pneumatique est défini par deux coquilles, chacune assurant le moulage d'un flanc, et par une couronne de secteurs assurant le moulage de la bande de roulement.

La fabrication des pneumatiques, et plus particulièrement la phase de vulcanisation, nécessite une mise sous pression de l'ébauche du pneumatique et un apport de calories à celle-ci.

Les moules de cuisson du type "à secteurs" sont réalisés en plusieurs pièces assemblées et animées par une cinématique appropriée, bien connue de l'homme du métier. Un exemple en est donné par le brevet US 3 797 979.

Pendant la vulcanisation, une certaine pression est exercée sur le matériau à mouler (caoutchouc cru), qui par ailleurs subit une importante diminution de viscosité, engendrée par l'élévation de température. Idéalement, pour éviter les bavures de moulage, les plans de joints du moule de cuisson devraient rester étanches, ou présenter un jeu inférieur ou égal au jeu faible autorisé par les caractéristiques physiques des mélanges de caoutchouc au moment de la vulcanisation (quelques centièmes de millimètres, de l'ordre de 0,03 mm). Précisons que l'on appelle "plans de joints" les interfaces entre chaque pièce monobloc constituant le moule, à savoir les coquilles et les secteurs.

Malheureusement, cette étanchéité est en pratique le plus souvent insuffisante et il apparaît des défauts de moulage connus sous le nom de "bavures de moulage", constituées par du caoutchouc qui s'est insinué dans les interfaces existant entre secteurs, et entre coquilles et secteurs.

Le problème subsistant dans l'état de la technique est illustré par les figures jointes dans lesquelles la figure 1 est une coupe dans un plan méridien d'un moule à secteurs connu, laissant apparaître un secteur 1 et les coquilles latérales 2 et les figures 2 et 3 montrent une coupe dans le plan I perpendiculaire à l'axe du moule, schématisant les deux types de configuration que prennent en pratique ces moules à secteurs.

La conception actuelle des moules peut être comparée à un cylindre fractionné en secteurs que l'on soumet à la fois à des pressions intérieures et extérieures. Convenons d'appeler "cercle d'emboîtage" C₁ le cercle fictif relevé à l'interface avec une coquille 2 latérale, mesuré sous la couronne de secteurs 1 lorsque tous les secteurs 1 sont en contact les uns sur les autres dans le sens circonférentiel. Le cercle correspondant, mesuré sur la coquille 2 s'appellera "cercle coquille" C₂. On utilise à dessein le terme "cercle" car cette interface est soit cylindrique, soit tronconique comme sur les figures. Dans ce cas, on ne peut parler de cercle stricto sensu que pour une position axiale déterminée seulement, mais ce détail technologique est sans importance pour la compréhension du problème posé, et de la solution apportée par l'invention.

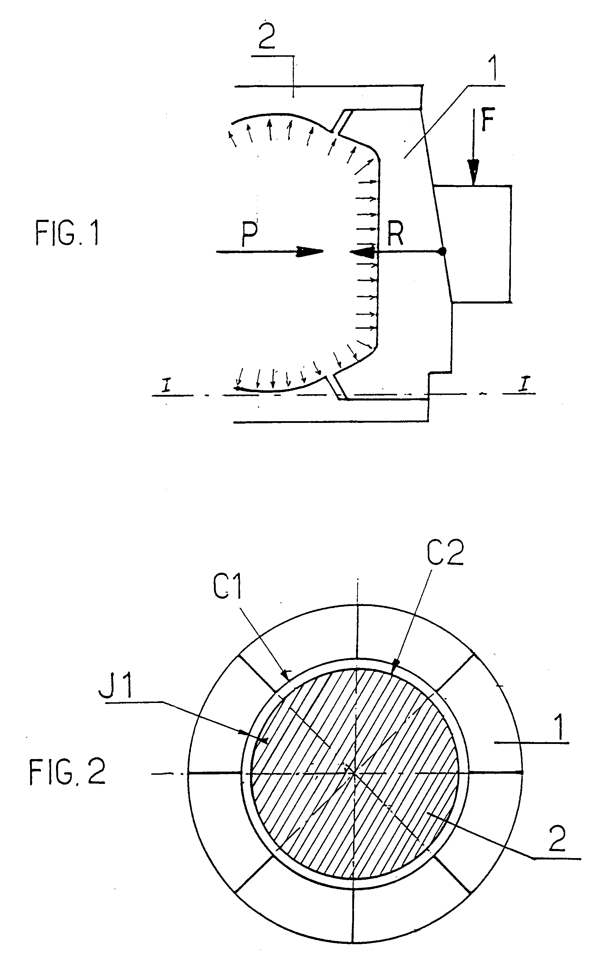

Dans le cas de la figure 2, le cercle d'emboîtage C₁ est plus grand que le cercle coquille C₂. A la fermeture du moule, il n'y a pas de jeu entre secteurs 1. Un jeu radial J₁ subsiste entre le cercle d'emboîtage C₁ relevé sur la couronne des secteurs 1 et le cercle coquille C₂.

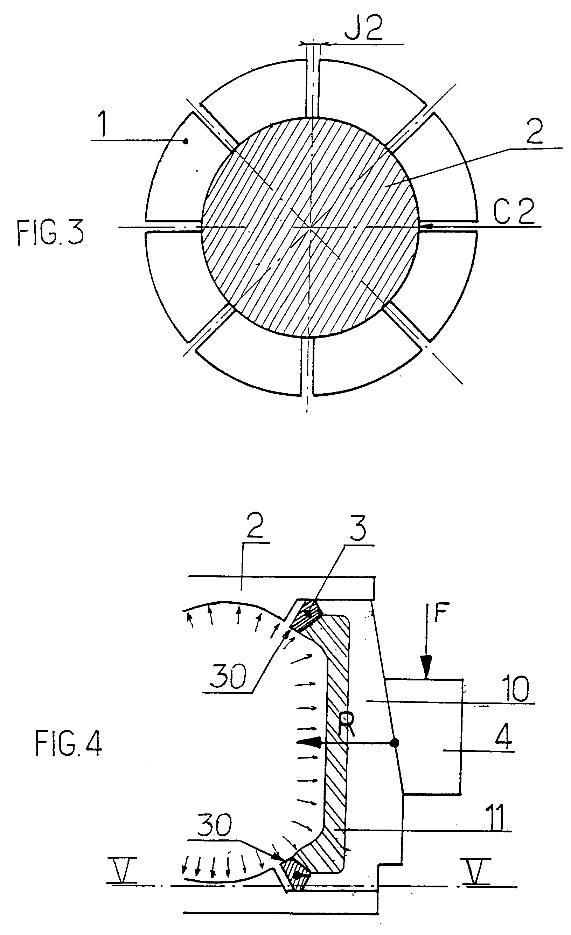

Dans le cas de la figure 3, le cercle d'emboîtage secteurs C₁ que l'on aurait pu mesurer si les secteurs avaient pu se rapprocher jusqu'à venir en contact les uns sur les autres serait plus court que le cercle coquille C₂. Ce rapprochement est impossible car auparavant les secteurs 1 entrent en contact avec les coquilles. Un jeu J₂ subsiste entre les secteurs 1 en butée sur la coquille. Il n'y a donc pas de jeu entre un secteur 1 et la coquille 2. Ce n'est que dans le cas intermédiaire théorique compris entre la configuration illustrée par la figure 2 et celle illustrée par la figure 3, que l'on pourrait avoir une étanchéité totale du moule. Le brevet US 3 797 979 illustre l'état de la technique et correspond au préambule de la revendication 1.

La demande de brevet DE-A-1 808 811 traite du problème de l'étanchéité aux plans de joints entre secteurs. L'invention propose de résoudre ce problème en rendant la couronne de secteurs 1 circonférentiellement compressible sous l'effet de l'effort de frettage F de cette couronne conféré par la presse de vulcanisation.

Le moule à secteurs pour pneumatiques selon l'invention, composé de deux coquilles assurant chacune le moulage d'un flanc du pneumatique, et d'une couronne de secteurs assurant le moulage de la bande de roulement du pneumatique, chaque secteur comportant un support et une garniture de moulage, ladite garniture étant située radialement à l'intérieur du support, couronne dont les secteurs sont, en position de fermeture dudit moule, tous en contact deux à deux dans le sens circonférentiel via les garnitures de moulage, et en contact sur les coquilles par leurs extrémités latérales, est caractérisé en ce que ladite garniture de moulage est reliée au support par des moyens de fixation et en ce que chaque secteur comporte en outre deux segments en arc de cercle, chaque segment étant fixé sur une des extrémités latérales respectives du support, de telle sorte que, en position de fermeture dudit moule :
1) les secteurs sont en contact les uns sur les autres obligatoirement via lesdits segments, et jamais via les supports,
2) le contact entre secteurs et coquilles est assuré exclusivement via les segments,
3) tous les segments sont en compression élastiquement par leur appui les uns sur les autres.

Les figures 4 et suivantes permettent de bien comprendre le principe de réalisation d'un moule, tel que proposé par l'invention.

La figure 4 est une coupe méridienne d'un moule selon l'invention.

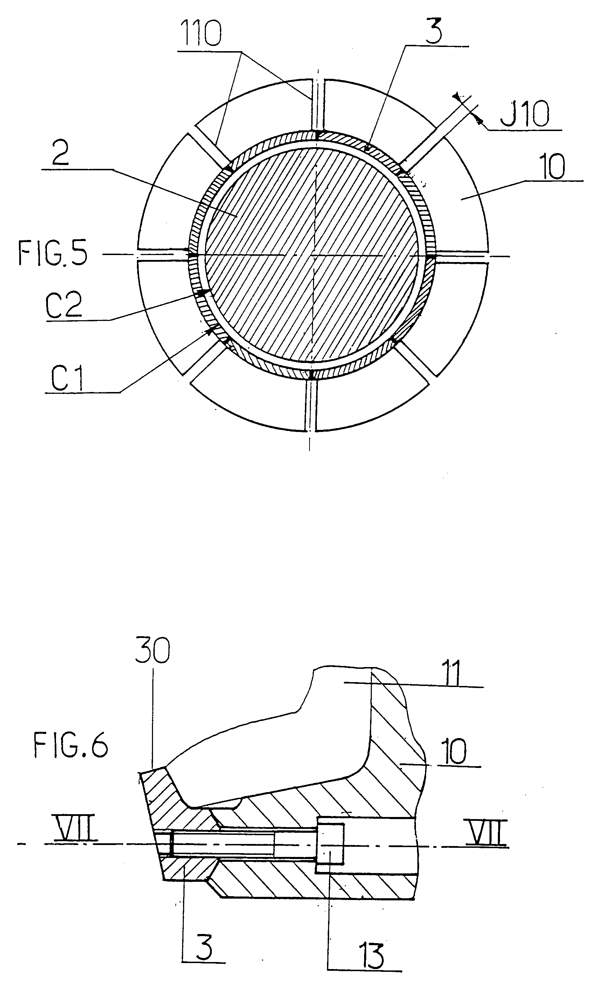

La figure 5 est une coupe selon V-V à la figure 4.

La figure 6 illustre un détail du moule selon l'invention.

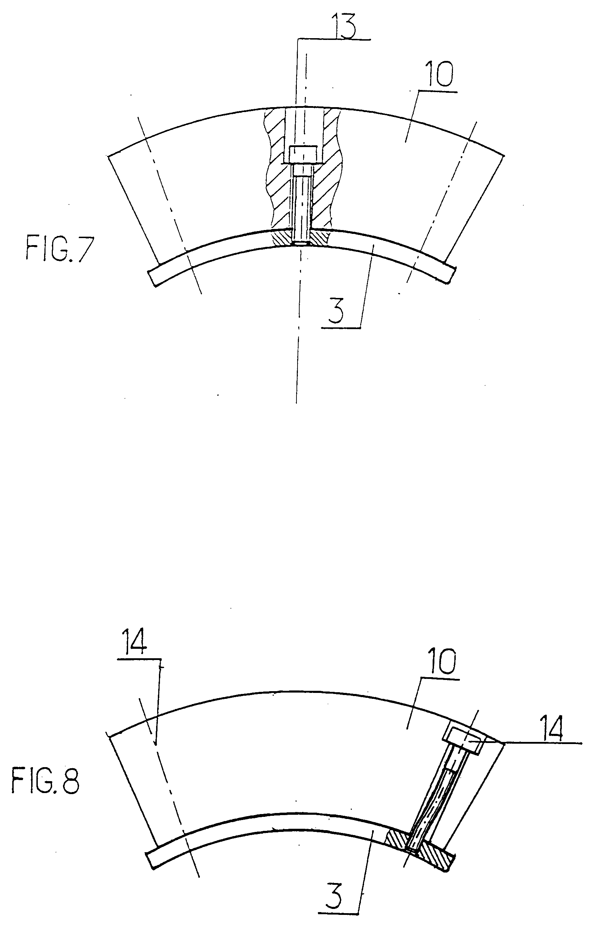

La figure 7 est une coupe selon VII-VII à la figure 6.

La figure 8 illustre un autre détail du moule.

A la figure 4, on voit qu'un secteur 1 comporte un support 10, et une garniture de moulage 11, en général en aluminium. De façon fort avantageuse, celle-ci est maintenue sur le support 10 par les segments 3, qui assurent ainsi la fixation de la garniture de moulage sur le support. Les segments 3 sont donc fixés sur le support 10 et enserrent la garniture 11. On voit à la figure 5 que les supports 10 ne sont pas en contact les uns sur les autres. Il subsiste toujours un jeu J₁₀ entre supports.

Le principe du moule selon l'invention consiste à pouvoir diminuer élastiquement la circonférence du cercle d'emboîtage C₁ jusqu'à le faire coïncider avec le cercle coquille C₂, en utilisant les efforts disponibles dans la presse dans laquelle le moule est monté, appliqués sur la couronne de secteurs par une frette 4 agissant sur une portée tronconique, ou par tout autre dispositif d'effet équivalent.

Il faut pour cela diminuer la raideur circonférentielle du cylindre constituant la couronne de secteurs 1, en diminuant sa section intervenant dans l'effort circonférentiel, grâce à des segments 3 qui, mis bout à bout, constituent deux joncs de faible section (voir figures 4 et 5). Les segments 3 constituant les joncs latéraux se compriment, un jeu J₁₀ étant prévu entre les supports 10 qui donc ne sont jamais mis en compression par leurs faces 110.

Sous l'action de la force F, entraînant, via la frette 4 un effort résultant radial R, les segments 3, en contact sur leurs extrémités, se compriment comme il en serait d'un tube soumis à une pression extérieure. Le raccourcissement des segments 3 autorise l'avance des supports 10, non en contact entre eux, jusqu'à obtention de l'appui des segments sur les coquilles 2.

Toutes les garnitures de moulage 11 portant le négatif de la sculpture de la bande de roulement sont dimensionnées de telle sorte qu'elles soient elles aussi comprimées circonférentiellement au moins lors de la première fermeture du moule. Dans le sens circonférentiel, de préférence, elles débordent donc légèrement de part et d'autre de chaque segment 3.

Dans cet exemple, comme dans la plupart des réalisations de moules pour pneumatiques, les garnitures de moulage 11 sont exécutées en fonderie dans un alliage d'aluminium, et toutes les autres pièces (supports 10 et segments 3, coquilles 2) sont réalisées en acier.

Les faibles caractéristiques (module d'élasticité E, limite élastique Rₑ) des alliages d'aluminium, considérablement minorées (en particulier Rₑ) par la température, autoriseront, lors de la première fermeture du moule, une auto-adaptation (raccourcissement permanent) en périmètre de l'ensemble des garnitures de moulage 11 au périmètre minimum permis par les autres pièces du système, et en particulier par le contact des segments 3 entre eux et sur les coquilles 2. Il faut donc que, du moins à la température de vulcanisation, le cercle formé par les garnitures 11 soit supérieur ou égal au périmètre formé par les segments 3. D'une manière générale, tout l'aspect dimensionnel de la description de cette invention s'entend à la température de vulcanisation.

Ainsi, on a réussi à éliminer les jeux et, en conséquence, toute pénétration de la matière à mouler dans les interstices formés par les jonctions des différentes pièces réunies, afin qu'il n'apparaisse plus de bavure de moulage sur les pneumatiques.

De préférence, la fixation des segments 3 sur les supports 10 sera placée, comme illustré par la figure 7, dans une zone sans mouvement relatif des pièces (au milieu de l'arc que constitue un support) en implantant une vis 13 de fixation qui immobilise les segments 3 sur un support (pas de mouvement relatif possible entre segment et support au droit de la fixation par vis 13). On peut implanter une tige filetée plus longue 14, traversant les supports dans des trous autorisant une flexion des tiges filetées comme indiqué à la figure 8, pour permettre un glissement circonférentiel du segment par rapport au support, afin d'absorber les variations de longueur du segment au cours de la fermeture du moule. Ce type de liaison qui autorise un mouvement relatif entre segment et support remplace ou complète la liaison par une vis 13 n'autorisant aucun mouvement relatif.

La souplesse du segment 3 lui permet aussi de s'adapter à la courbure de son support 10. Ainsi, il est possible de tourner le segment à un diamètre différent de son diamètre d'utilisation dans la mesure où sa longueur développée correspond à sa longueur d'utilisation. Les points de fixation du segment sur son support doivent être dans ce cas tels qu'ils permettent cette adaptation en diamètre.

De préférence (voir figures 4 et 6), chaque segment 3 comporte une face 30 entrant en contact avec le pneumatique lorsque le moule est fermé, c'est-à-dire est en position de moulage du pneumatique. De cette façon, on évite tout contact entre les coquilles en acier, et la garniture de moulage 11 en aluminium. L'aluminium risquerait en effet de se déformer sous l'effet de ce contact lors de la fermeture du moule. Lors de chaque fermeture et grâce à ce mode préféré de réalisation, seules des pièces en acier (segment 3 et coquilles 2) entrent en contact entre secteurs et coquilles et toute détérioration du moule est évitée ; autrement dit, entre secteurs et coquilles, il n'y a pas de contact aluminium sur acier.

Dans la technologie classique, c'est-à-dire celle illustrée par la figure 2, comme il est nécessaire que tous les supports des secteurs entrent en contact les uns sur les autres, il est impossible d'obtenir ces supports par simple découpage d'une seule pièce annulaire venue de fonderie. En effet, le découpage enlève nécessairement une certaine épaisseur de matière, aussi faible soit-elle. On utilise donc classiquement deux pièces annulaires, ou bien on part d'une pièce trop grande en diamètre que l'on découpe, puis on rassemble les secteurs en couronne pour les usiner au bon diamètre.

Grâce à la présente invention, puisqu'il faut impérativement laisser un jeu J₁₀ entre supports, il est possible de réaliser l'ensemble des supports d'une couronne à partir d'une seule pièce annulaire de fonderie, ce qui constitue encore un avantage appréciable de l'invention. En outre, les faces 110 du support 10, qui ne viennent plus en contact les uns sur les autres, ne sont plus les faces fonctionnelles, et peuvent donc toujours rester à l'état brut.

## Revendications

1. Moule à secteurs pour pneumatiques, composé de deux coquilles (2) assurant chacune le moulage d'un flanc du pneumatique, et d'une couronne de secteurs (1) assurant le moulage de la bande de roulement du pneumatique, chaque secteur (1) comportant un support (10) et une garniture de moulage (11), ladite garniture étant située radialement à l'intérieur du support, couronne dont les secteurs sont, en position de fermeture dudit moule, tous en contact deux à deux dans le sens circonférentiel via les garnitures de moulage, et en contact sur les coquilles par leurs extrémités latérales,
caractérisé en ce que ladite garniture de moulage (11) est reliée au support (10) par des moyens de fixation, et en ce que chaque secteur comporte en outre deux segments (3) en arc de cercle, chaque segment (3) étant fixé sur une des extrémités latérales respectives du support, de telle sorte qu'en position de fermeture dudit moule :
1) les secteurs sont en contact les uns sur les autres obligatoirement via lesdits segments (3), et jamais via les supports,
2) le contact entre secteurs et coquilles est assuré exclusivement via les segments (3),
3) tous les segments (3) sont en compression élastiquement par leur appui les uns sur les autres.

2. Moule selon la revendication 1, caractérisé en ce que les segments assurent la fixation des garnitures sur les supports.

3. Moule selon la revendication 1 ou 2, caractérisé en ce que chaque segment (3) est fixé sur le support sensiblement au milieu de l'angle que forme le secteur (1) d'une façon qui empêche tout déplacement relatif entre le segment (3) et le support (10) au point de fixation.

4. Moule selon l'une des revendications 1 à 3, caractérisé en ce que chaque segment (3) est en outre fixé sur le support (10) par des tiges (14) longues assurant une pression du segment (3) sur le support (10) dans le sens radial, et autorisant des mouvements relatifs dans le sens circonférentiel.

5. Moule selon l'une des revendications 1 à 4, caractérisé en ce que chaque segment (3) comporte une face (30) entrant en contact avec le pneumatique lorsque le moule est en position de moulage.

6. Procédé de moulage d'un pneumatique, consistant à utiliser un moule selon l'une des revendications 1 à 5.

## Claims

1. A sector-type tyre mould which is formed of two shells (2) each ensuring the moulding of one side wall of the tyre, and of a ring of sectors (1) ensuring the moulding of the tread of the tyre, each sector (1) having a support (10) and a mould fitting (11), said fitting being located radially to the inside of the support, the sectors of which ring, in the closed position of said mould, are all in contact, two by two, in the circumferential direction via the mould fittings and in contact with the shells by their side ends, characterised in that said mould fitting (11) is fastened to the support (10) by fastening means and in that each sector furthermore has two segments (3) of the shape of a circular arc, each segment (3) being fastened on one of the respective side ends of the support, so that, in the closed position of said mould:
(1) the sectors are necessarily in contact with each other via said segments (3), and never via the supports,
(2) the contact between sectors and shells is ensured solely via the segments (3),
(3) all the segments (3) are under compression elastically by their resting against each other.

2. A mould according to Claim 1, characterised in that the segments attach the fittings on the supports.

3. A mould according to Claim 1 or 2, characterised in that each segment (3) is fastened on the support substantially at the middle of the arc which the sector (1) forms in a manner which prevents any relative displacement between the segments (3) and the support (10) at the point of attachment.

4. A mould according to one of Claims 1 to 3, characterised in that each segment (3) is furthermore fastened on the support (10) by long rods (14) which ensure a pressure of the segment (3) on the support (10) in the radial direction and permit relative movement in the circumferential direction.

5. A mould according to one of Claims 1 to 4, characterised in that each segment (3) has a face (30) which enters into contact with the tyre when the mould is in the moulding position.

6. A method of moulding a tyre, consisting of using a mould according to one of Claims 1 to 5.

## Patentansprüche

1. Sektorenform zur Herstellung von Luftreifen, die aus zwei Formseitenschalen (2), die zur Formgebung Jeweils einer Seitenwand des Luftreifens dienen, und einem Kranz von Sektoren (1), die zur Formgebung des Laufstreifens des Luftreifens dienen, besteht, wobei jeder Sektor (1) einen Träger (10) und einen Formeinsatz (11) aufweist, der sich an der radial inneren Seite des Trägers befindet, und die Sektoren des Kranzes bei geschlossener Form sämtlich in Umfangsrichtung über die Formeinsätze paarweise miteinander in Kontakt stehen und sich mit ihren seitlichen Enden mit den Formseitenschalen in Kontakt befinden,
dadurch gekennzeichnet, daß
der Formeinsatz (11) über Befestigungsmittel mit dem Träger (10) verbunden ist und jeder Sektor ferner zwei kreisbogenförmige Segmente (3) aufweist, wobei jedes Segment (3) an einem der entsprechenden seitlichen Enden des Trägers befestigt ist, derart, daß bei geschlossener Form:
1) die Sektoren zwingend über die Segmente (3) und niemals über die Träger miteinander in Kontakt stehen,
2) der Kontakt zwischen den Sektoren und den Formseitenschalen ausschließlich über die Segmente (3) gewährleistet wird und
3) sämtliche Segmente (3) durch ihre gegenseitige Anlage aneinander elastisch zusammengedrückt werden.

2. Form nach Anspruch 1, dadurch gekennzeichnet, daß die Segmente die Befestigung der Formeinsätze an den Trägern gewährleisten.

3. Form nach Anspruch 1 oder 2, dadurch gekennzeichnet, daß jedes Segment (3) etwa in der Mitte des Winkels, den der Sektor (1) bildet, in der Weise am Träger befestigt ist, daß jede relative Verschiebung zwischen dem Segment (3) und dem Träger (10) am Befestigungspunkt verhindert wird.

4. Form nach einem der Ansprüche 1 bis 3, dadurch gekennzeichnet, daß jedes Segment ferner über lange Stangen (14) am Träger befestigt ist, die einen Druck des Segments (3) auf den Träger (10) in Radialrichtung sicherstellen und Relativbewegungen in Umfangsrichtung zulassen.

5. Form nach einem der Ansprüche 1 bis 4, dadurch gekennzeichnet, daß jedes Segment (3) eine Stirnfläche (30) aufweist, die mit dem Luftreifen in Kontakt kommt, wenn sich die Form in Ausformstellung befindet.

6. Verfahren zur Formgebung von Luftreifen, das in der Verwendung einer Form nach einem der Ansprüche 1 bis 5 beteht.
